# EUROPEAN PATENT APPLICATION

(11) **EP 2 693 821 A1**
(43) Date of publication of application: **05.02.2014**
(21) Application number: 12776157.5
(22) Date of filing: 28.04.2012
(51) Int. Cl.: H04W 72/04, H04W 88/02

(54) **DATA SENDING METHOD, TRANSMISSION RESOURCE ALLOCATION METHOD AND DEVICE**

(30) Priority: 29.04.2011 CN 201110110738
(71) Applicant: Huawei Technologies Co., Ltd., Shenzhen, Guangdong 518129 (CN)
(72) Inventor: QUAN, Wei, Shenzhen Guangdong 518129 (CN); DONG, Ning, Shenzhen Guangdong 518129 (CN); JIANG, Yi, Shenzhen Guangdong 518129 (CN)
(74) Representative: Pfenning, Meinig & Partner GbR
(86) International application number: PCT/CN2012/074918
(87) International publication number: WO 2012/146210

(57) **Abstract**

The present invention discloses a method for sending a BSR. The method includes: if an LCG logical channel meets a regular BSR trigger condition, triggering a first regular BSR; or if a BSR retransmission timer expires, and any LCG logical channel has transmittable data, triggering a second regular BSR; if the LCG logical channel triggering the first regular BSR meets a non-transmittable condition, canceling the first regular BSR; or if all LCG logical channels meet a non-transmittable condition after the second regular BSR is triggered, canceling the second regular BSR; and if an uplink transmission resource is available in a current TTI, and the first or second regular BSR that is triggered but not canceled exists, sending a BSR MAC CE by using the uplink transmission resource. The disclosed method prevents a UE from generating and reporting meaningless BSR MAC CEs, and thereby saves transmission resources.

## Description

### CROSS-REFERENCE TO RELATED APPLICATIONS

This application claims priority to Chinese Patent Application No. 201110110738.X, filed with the Chinese Patent Office on April 29, 2011 and entitled "DATA SENDING METHOD AND TRANSMISSION RESOURCE ALLOCATION METHOD AND APPARATUS", which is incorporated herein by reference in its entirety.

### TECHNICAL FIELD

The present invention relates to the field of radio communications, and in particular, to a data sending method and a transmission resource allocation method and apparatus.

### BACKGROUND

In a conventional long term evolution (Long Term Evolution, LTE) system, all user equipments (User Equipment, UE) connected to an evolved base station (evolved NodeB, eNB) share air interface resources, that is, the eNB dynamically allocates transmission resources to its subordinate UEs at an transmission time interval (Transmission Time Interval, TTI) according to the data amount of each UE and other information, thereby improving channel utilization.

In uplink data scheduling, a UE reports its buffer data amount to the eNB by sending a buffer status report (Buffer Status Report, BSR), thereby providing reference information for the eNB to perform uplink scheduling. The eNB allocates uplink transmission resources to the UE according to a certain rule and available resources and BSRs and other information of all UEs.

At present, the UE relates to a BSR reporting mechanism and a Packet Data Convergence Protocol (Packet Data Convergence Protocol, PDCP) discarding mechanism.

In the BSR reporting mechanism, a logical channel group (Logical Channel Group, LCG) logical channel having transmittable data may trigger a regular BSR through the BSR triggering mechanism, and may send the BSR in a triggered state through the BSR sending mechanism. The LCG logical channel refers to a logical channel that belongs to the LGC.

### PDCP discarding mechanism:

A PDCP entity of the UE starts a discard timer (discard Timer) for each transmittable PDCP service data unit (Service Data Unit, SDU). If the discard timer of the PDCP SDU expires, the PDCP entity discards the PDCP SDU and a corresponding PDCP protocol data unit (Protocol Data Unit, PDU), and notifies a corresponding radio link control (Radio Link Control, RLC) entity of discarding the corresponding RLC SDU. However, if the RLC SDU has been assembled into an RLC PDU, the RLC entity does not discard the RLC SDU.

### The BSR reporting mechanism has the following problem:

After the regular BSR is triggered, the BSR may be always in the triggered state because no uplink transmission resource is allocated, but the transmittable data in the LCG logical channel triggering the BSR, for example, the PDCP SDU and corresponding PDCP PDU, may be discarded because the discard timer expires. Because the BSR is in the triggered state, the BSR may be still sent. However, because the PDCP SDU triggering the BSR and the corresponding PDCP PDU are discarded, it is unnecessary to send the BSR at this time. Therefore, in this case, unnecessary BSR sending may be caused, and transmission resources are wasted.

### SUMMARY

To reduce the waste of transmission resources, embodiments of the present invention provide a method for sending a BSR and an SR, a transmission resource allocation method, a user equipment, and a base station.

The technical solutions are as follows:

### A method for sending a buffer status report BSR includes:

A method for sending a buffer status report BSR includes:
if a logical channel group LCG logical channel meets a regular BSR trigger condition, triggering a first regular BSR; or if a BSR retransmission timer expires, and any LCG logical channel has transmittable data, triggering a second regular BSR;
if the LCG logical channel triggering the first regular BSR meets a non-transmittable condition, canceling the first regular BSR; or if all LCG logical channels meet a non-transmittable condition after the second regular BSR is triggered, canceling the second regular BSR;
if an uplink transmission resource is available in a current transmission time interval TTI, and the first or second regular BSR in a triggered state exists, sending a buffer status report media access control control element BSR MAC CE by using the uplink transmission resource.

A user equipment includes:
a regular BSR triggering module, configured to: if a logical channel group LCG logical channel meets a regular BSR trigger condition, trigger a first regular BSR, or if a BSR retransmission timer expires, and any LCG logical channel has transmittable data, trigger a second regular BSR;
a regular BSR canceling module, configured to: if the LCG logical channel triggering the first regular BSR meets a non-transmittable condition, cancel the first regular BSR triggered by the regular BSR triggering module, or if all LCG logical channels meet a non-transmittable condition after the second regular BSR is triggered, cancel the second regular BSR triggered by the regular BSR triggering module; and
a regular BSR sending module, configured to: if an uplink transmission resource is available in a current TTI, and the first or second regular BSR in a triggered state, which is triggered by the regular BSR triggering module, exists, send a BSR MAC CE by using the uplink transmission resource.

A method for sending a scheduling request SR includes:
if an LCG logical channel meets a regular BSR trigger condition, triggering a first regular BSR; or if a BSR retransmission timer expires, and any LCG logical channel has transmittable data, triggering a second regular BSR;
if no uplink transmission resource is available in a current TTI, and the first or second regular BSR in a triggered state exists, triggering an SR;
if the LCG logical channel triggering the first regular BSR meets a non-transmittable condition, canceling the first regular BSR; or if all LCG logical channels meet a non-transmittable condition after the second regular BSR is triggered, canceling the second regular BSR;
if all regular BSRs are canceled, canceling all SRs; and
if no uplink transmission resource is available in the current TTI, and an SR in a triggered state exists, sending the SR by using an SR resource or a random access procedure.

A user equipment includes:
a regular BSR triggering module, configured to: if a logical channel group LCG logical channel meets a regular BSR trigger condition, trigger a first regular BSR, or if a BSR retransmission timer expires, and any LCG logical channel has transmittable data, trigger a second regular BSR;
an SR triggering module, configured to: if no uplink transmission resource is available in a current TTI, and the first or second regular BSR in a triggered state, which is triggered by the regular BSR triggering module, exists, trigger an SR;
a regular BSR canceling module, configured to: if the LCG logical channel triggering the first regular BSR meets a non-transmittable condition, cancel the first regular BSR triggered by the regular BSR triggering module, or if all LCG logical channels meet a non-transmittable condition after the second regular BSR is triggered, cancel the second regular BSR triggered by the regular BSR triggering module;
an SR canceling module, configured to: if all regular BSRs triggered by the regular BSR triggering module are canceled by the regular BSR canceling module, cancel all SRs triggered by the SR triggering module; and
an SR sending module, configured to: if no uplink transmission resource is available in the current TTI, and an SR in a triggered state, which is triggered by the SR triggering module, exists, send the SR by using an SR resource or a random access procedure.

A transmission resource allocation method includes:
receiving an SR sent by a user equipment;
determining whether the number of received SRs is smaller than the maximum number of SR transmissions;
if the number of received SRs is smaller than the maximum number of SR transmissions, determining whether an uplink transmission resource is allocated to the user equipment after the SR is received;
if no uplink transmission resource is allocated to the user equipment after the SR is received, determining whether another SR sent by the user equipment is received; and
if no other SR sent by the user equipment is received, not allocating an uplink transmission resource to the user equipment.

A base station includes:
an SR receiving module, configured to receive an SR sent by a user equipment; and
an uplink transmission resource allocating module, configured to: determine whether the number of SRs received by the SR receiving module is smaller than the maximum number of SR transmissions; if the number of received SRs is smaller than the maximum number of SR transmissions, determine whether an uplink transmission resource is allocated to the user equipment after the SR is received; if no uplink transmission resource is allocated to the user equipment after the SR is received, determine whether another SR sent by the user equipment is received; and if no other SR sent by the user equipment is received, not allocate an uplink transmission resource to the user equipment.

By using the method and user equipment for sending a buffer status report according to the embodiments, if data in a logical channel triggering a regular buffer status report meets a non-transmittable condition, the regular buffer status report is canceled. Therefore, the user equipment is prevented from generating a meaningless buffer status report media access control control element and reporting a buffer status report, and the base station is prevented from receiving and processing the meaningless buffer status report, thereby saving transmission resources.

By using the method and user equipment for sending a scheduling request according to the embodiments, if data in a logical channel triggering a regular buffer status report meets a non-transmittable condition, the regular buffer status report and scheduling request are canceled. Therefore, firstly, unnecessary sending of the scheduling request is reduced, which saves transmission resources and also reduces power consumption of the user equipment, and reduces interference caused by the scheduling request to other users; secondly, releasing of related resources and the random access procedure caused by the failure to send the scheduling request (that is, the scheduling request counter reaches the maximum number of scheduling request transmissions) are avoided, thereby saving signaling overheads and random access resources.

By using the transmission resource allocation method and base station according to the embodiments, it may be determined that the user equipment cancels an SR, and it may be further inferred that all regular BSRs of the user equipment are canceled and do not need to be sent, and therefore, no uplink transmission resource is allocated to the user equipment, thereby saving uplink transmission resources.

### BRIEF DESCRIPTION OF DRAWINGS

FIG. 1 is a flowchart of a method for sending a BSR according to an embodiment of the present invention;
FIG. 2 is a schematic structural diagram of a UE according to an embodiment of the present invention;
FIG. 3 is a flowchart of a method for sending an SR according to an embodiment of the present invention;
FIG. 4 is a schematic structural diagram of a UE according to an embodiment of the present invention;
FIG. 5 is a flowchart of a transmission resource allocation method according to an embodiment of the present invention;
FIG. 6 is a schematic structural diagram of a base station according to an embodiment of the present invention;
FIG. 7 is a flowchart of a method for sending a padding BSR according to another embodiment of the present invention;
FIG. 8 is a flowchart of an improved method for sending a padding BSR according to another embodiment of the present invention;
FIG. 9 is a schematic structural diagram of a UE according to an embodiment of the present invention;
FIG. 10 is a flowchart of a transmission resource allocation method according to another embodiment of the present invention; and
IG. 11 is a schematic structural diagram of a base station according to another embodiment of the present invention.

### DESCRIPTION OF EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

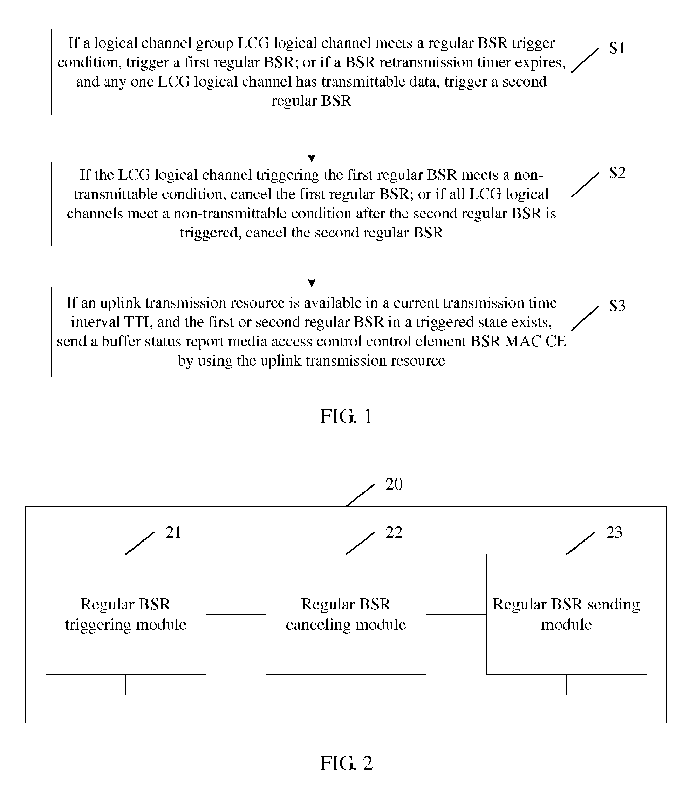

FIG. 1 is a flowchart of a method for sending a BSR according to an embodiment of the present invention. A method for sending a BSR according to an embodiment of the present invention includes the following steps:
Step S1: If an LCG logical channel meets a regular BSR trigger condition, trigger a first regular BSR; or if a BSR retransmission timer expires, and any LCG logical channel has transmittable data, trigger a second regular BSR.

In an implementation of this embodiment, "meeting a regular BSR trigger condition" in step S1 is meeting the following condition: In the LCG logical channel, an amount of transmittable data increases from zero or data therein becomes transmittable, and a priority of the LCG logical channel is higher than priorities of all other LCG logical channels having transmittable data.

For example, among multiple LCG logical channels of the UE, the amount of transmittable data in the first LCG logical channel increases from zero, or the data in the first LCG logical channel becomes transmittable, and a part or all of other LCG logical channels also have transmittable data, but the priority of the first LCG logical channel is higher than priorities of the other LCG logical channels having transmittable data. In this case, the UE triggers a first regular BSR.

Or, when at least one BSR is triggered but not canceled, the UE determines, in each TTI, whether any uplink transmission resource is available in the current TTI; and if an uplink transmission resource is available, the UE starts or restarts a BSR retransmission timer. Once the BSR retransmission timer expires, and any LCG logical channel of the UE has transmittable data, the UE triggers a second regular BSR.

In another implementation of this embodiment, "meeting a regular BSR trigger condition" in step S1 is meeting the following condition: In the LCG logical channel, an amount of transmittable data increases from zero, and previously no LCG logical channel has transmittable data.

For example, if an amount of transmittable data in any LCG logical channel increases from zero, and previously no other LCG logical channel has transmittable data, the UE triggers a first regular BSR.

In another implementation of this embodiment, "meeting a regular BSR trigger condition" in step S1 is meeting any one of the following conditions: In the LCG logical channel, an amount of transmittable data increases from zero or data therein becomes transmittable, and a priority of the LCG logical channel is higher than priorities of other LCG logical channels having transmittable data; and an amount of transmittable data in the LCG logical channel increases from zero, and previously no LCG logical channel has transmittable data. Specifically, so long as either of the two conditions is met, the UE triggers a first regular BSR.

Herein it should be specially noted that after the regular BSR is triggered, the regular BSR is in a triggered state. After the regular BSR is triggered, the regular BSR may be retriggered through step S1. In this case, it may be considered that the retriggered regular BSR is to keep the previously triggered regular BSR in the triggered state or pending (pending) state, or it may also be considered that multiple regular BSRs are triggered. For example, data in an LCG logical channel meets a regular BSR trigger condition, and the triggered regular BSR is not canceled, but data in another LCG logical channel also meets the regular BSR trigger condition; in this case, it may be considered that retriggering the regular BSR actually maintains the triggered state, or it may also be considered that two regular BSRs are triggered. The description of this embodiment and other embodiments is based on an assumption that multiple regular BSRs are triggered.

Step S2: If the LCG logical channel triggering the first regular BSR meets a non-transmittable condition, cancel the first regular BSR; or if data of all LCG logical channels meets a non-transmittable condition after the second regular BSR is triggered, cancel the second regular BSR.

In an implementation of this embodiment, "the LCG logical channel meets a non-transmittable condition" in step S2 is that the LCG logical channel has no transmittable data.

For example, when the LCG logical channel has transmittable data, the UE starts a discard timer for each transmittable PDCP SDU; if the discard timer of the PDCP SDU expires, the UE discards the PDCP SDU and a corresponding PDCP PDU, and discards a corresponding RLC SDU. However, if the RLC SDU has been assembled into an RLC PDU, the RLC SDU is not discarded. Therefore, if all data in the LCG logical channel is discarded because the discard timer expires, the LCG logical channel has no transmittable data.

If the LCG logical channel has no transmittable data triggering the first regular LCG through step S1, the first regular BSR is canceled.

If no LCG logical channel has transmittable data after the second regular LCG is triggered through step S1, the second regular BSR is canceled.

In this implementation, preferably, step S2 may be executed in an event-triggered mode. For example, when the LCG logical channel triggering the first regular BSR meets the non-transmittable condition, canceling the first regular BSR is automatically triggered. Or, after the second regular BSR is triggered, if all LCG logical channels meet the non-transmittable condition, canceling the second regular BSR is automatically triggered.

In another implementation, step S2 may be also executed in a cyclic determining mode. For example, in each TTI, whether each LCG logical channel meets the non-transmittable condition is determined. When the LCG logical channel triggering the first regular BSR meets the non-transmittable condition, the UE cancels the first regular BSR. Or, after the second regular BSR is triggered, if all LCG logical channels meet the non-transmittable condition, the UE cancels the second regular BSR.

Step S3: If an uplink transmission resource is available in the current transmission time interval TTI, and the first or second regular BSR in the triggered state exists, send a BSR MAC CE by using the uplink transmission resource.

In an implementation of this embodiment, if the first or second regular BSR that is triggered through step S1 but not canceled through step S2 exists, the UE determines whether an uplink transmission resource is available in each TTI, and if so, constructs and sends a BSR MAC CE.

FIG. 2 is a schematic structural diagram of a UE according to an embodiment of the present invention. A UE 20 in this embodiment may implement the method for sending a BSR according to the embodiment of the present invention as shown in FIG. 1. As shown in FIG. 2, the UE 20 may include a regular BSR triggering module 21, a regular BSR canceling module 22, and a regular BSR sending module 23.

The regular BSR triggering module 21 is configured to: if a logical channel group LCG logical channel meets a regular BSR trigger condition, trigger a first regular BSR, or if a BSR retransmission timer expires, and any LCG logical channel has transmittable data, trigger a second regular BSR.

In an implementation of this embodiment, the regular BSR triggering module 21 being configured to trigger the first regular BSR if the LCG logical channel meets the regular BSR trigger condition, specifically includes: the regular BSR triggering module being configured to trigger the first regular BSR if the LCG logical channel meets any one of the following conditions: In the LCG logical channel, an amount of transmittable data increases from zero or data therein becomes transmittable, and a priority of the LCG logical channel is higher than priorities of all other LCG logical channels having transmittable data; and in the LCG logical channel, an amount of transmittable data increases from zero, and previously no LCG logical channel has transmittable data.

The regular BSR canceling module is configured to: if the LCG logical channel triggering the first regular BSR meets a non-transmittable condition, cancel the first regular BSR triggered by the regular BSR triggering module, or if all LCG logical channels meet a non-transmittable condition after the second regular BSR is triggered, cancel the second regular BSR triggered by the regular BSR triggering module.

In an implementation of this embodiment, the regular BSR canceling module 22 is specifically configured to: if the LCG logical channel triggering the first regular BSR has no transmittable data, cancel the first regular BSR triggered by the regular BSR triggering module, or if no LCG logical channel has transmittable data after the second regular BSR is triggered, cancel the second regular BSR triggered by the regular BSR triggering module.

The regular BSR sending module 23 is configured to: if an uplink transmission resource is available in a current TTI, and the first or second regular BSR in a triggered state, which is triggered by the regular BSR triggering module, exists, send a BSR MAC CE by using the uplink transmission resource.

By using the method for sending a BSR and the UE provided by the above embodiments, if data in an LCG logical channel triggering a BSR meets a non-transmittable condition, or no LCG logical channel has transmittable data, the corresponding regular BSR is canceled. Therefore, the UE is prevented from generating a meaningless BSR MAC CE and reporting a BSR, and the base station is prevented from receiving and processing the meaningless BSR, thereby saving transmission resources.

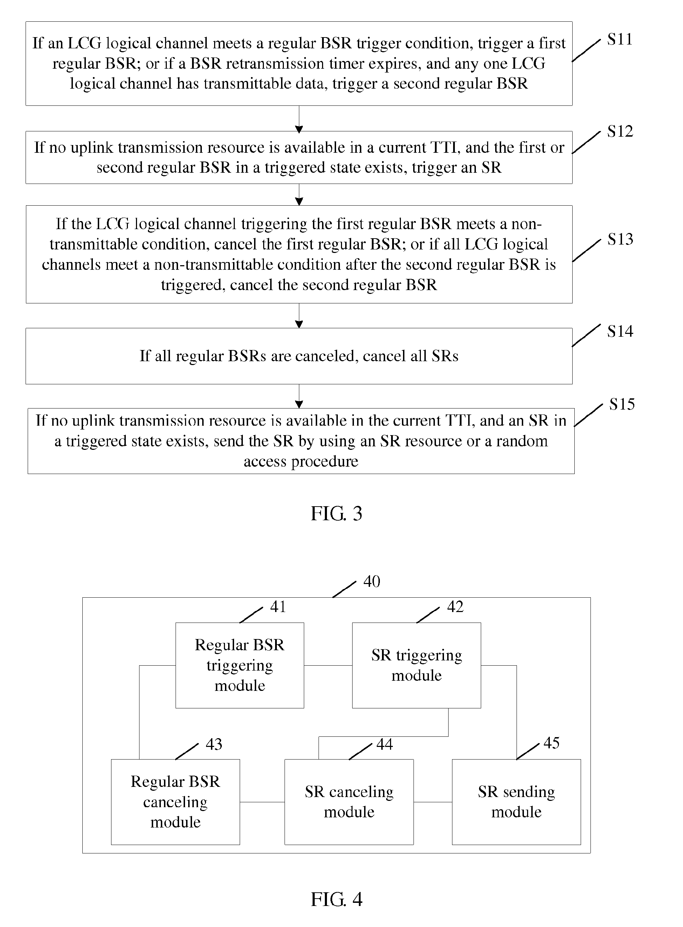

FIG. 3 is a flowchart of a method for sending an SR according to an embodiment of the present invention. A method for sending an SR according to an embodiment of the present invention includes the following steps:

Step S11: If an LCG logical channel meets a regular BSR trigger condition, trigger a first regular BSR; or if a BSR retransmission timer expires, and any LCG logical channel has transmittable data, trigger a second regular BSR.

Step S11 is the same as step S1, and is not further described herein.

Step S12: If no uplink transmission resource is available in a current TTI, and the first or second regular BSR in a triggered state exists, trigger an SR.

In an implementation of this embodiment, if the regular BSR is triggered but not canceled, the UE determines, in each TTI, whether any uplink transmission resource is available in the current TTI, and if no uplink transmission resource is available, the UE triggers the SR. A regular BSR may trigger a corresponding SR. For example, after a regular BSR triggers a corresponding SR, another BSR may also trigger an SR corresponding to the other BSR.

In an implementation of this embodiment, if the regular BSR is triggered but not canceled, the UE determines, in each TTI, whether any uplink transmission resource is available in the current TTI, and if no uplink transmission resource is available, the UE triggers the SR. At most one SR can be triggered no matter whether there is one or multiple BSRs. For example, after a regular BSR triggers an SR, another BSR only keeps the triggered SR in the triggered state or pending state but does not retrigger a new SR.

Step S13: If the LCG logical channel triggering the first regular BSR meets a non-transmittable condition, cancel the first regular BSR; or if all LCG logical channels meet a non-transmittable condition after the second regular BSR is triggered, cancel the second regular BSR.

In an implementation of this embodiment, "the LCG logical channel meets a non-transmittable condition" in step S13 is that the LCG logical channel has no transmittable data. The detailed description of step S 13 is the same as that of step S2, and is not further given herein.

Step S14: If all regular BSRs are canceled, cancel all SRs.

In an implementation of this embodiment, the triggered SR is in one-to-one correspondence to the regular BSR. If one of the regular BSRs is canceled, the SR corresponding to the canceled regular BSR is canceled; or if all regular BSRs are canceled at the same time or in sequence, all SRs are canceled.

In an implementation of this embodiment, only one SR corresponds to all regular BSRs; and when all regular BSRs are canceled at the same time or in sequence, the SR is canceled.

Similar to step S2, step S14 may be also executed in an event-triggered mode or a cyclic determining mode.

Step S15: If no uplink transmission resource is available in the current TTI, and an SR in a triggered state exists, send the SR by using an SR resource or a random access procedure.

In an implementation of this embodiment, if an SR that is triggered but not canceled exists, the UE executes the following steps in each TTI:
Step A: If no uplink transmission resource is available in the current TTI, execute step B.
Step B: If a higher layer is not configured with an SR resource, trigger a random access procedure; or if a higher layer is configured an SR resource, execute step C.
Step C: If a configured SR resource is available in the current TTI, and an SR prohibit timer (sr-ProhibitTimer) does not run, and the SR counter (SR_COUNTER) is smaller than the maximum number of SR transmissions (dsr-TransMax), execute step D; or if a configured SR resource is available in the current TTI, and an SR prohibit timer does not run, but an SR counter is equal to the maximum number of SR transmissions, execute step E.
Step D: Add 1 to the SR counter; send an SR on the configured SR resource; and start the SR prohibit timer.
Step E: Notify RRC of releasing related configuration resources; cancel all triggered SRs, and initiate a random access procedure.

FIG. 4 is a schematic structural diagram of a UE according to an embodiment of the present invention. A UE 40 in this embodiment may implement the method for sending an SR according to the embodiment of the present invention as shown in FIG. 3. As shown in FIG. 4, the UE 40 may include a regular BSR triggering module 41, an SR triggering module 42, a regular BSR canceling module 43, an SR canceling module 44, and an SR sending module 45.

The regular BSR triggering module 41 is configured to: if a logical channel group LCG logical channel meets a regular BSR trigger condition, trigger a first regular BSR, or if a BSR retransmission timer expires, and any LCG logical channel has transmittable data, trigger a second regular BSR.

In an implementation of this embodiment, the regular BSR triggering module being configured to trigger the first regular BSR if the LCG logical channel meets the regular BSR trigger condition, specifically includes: the regular BSR triggering module being configured to trigger the first regular BSR if the LCG logical channel meets any one of the following conditions: In the LCG logical channel, an amount of transmittable data increases from zero or data therein becomes transmittable, and a priority of the LCG logical channel is higher than priorities of all other LCG logical channels having transmittable data; and in the LCG logical channel, an amount of transmittable data increases from zero, and previously no LCG logical channel has transmittable data.

The SR triggering module 42 is configured to: if no uplink transmission resource is available in a current TTI, and the first or second regular BSR in a triggered state, which is triggered by the regular BSR triggering module, exists, trigger an SR.

The regular BSR canceling module 43 is configured to: if the LCG logical channel triggering the first regular BSR meets a non-transmittable condition, cancel the first regular BSR triggered by the regular BSR triggering module, or if all LCG logical channels meet a non-transmittable condition after the second regular BSR is triggered, cancel the second regular BSR triggered by the regular BSR triggering module.

In an implementation of this embodiment, the regular BSR canceling module 43 is specifically configured to:
if the LCG logical channel triggering the first regular BSR has no transmittable data, cancel the first regular BSR triggered by the regular BSR triggering module, or if no LCG logical channel has transmittable data after the second regular BSR is triggered, cancel the second regular BSR triggered by the regular BSR triggering module.

The SR canceling module 44 is configured to: if all regular BSRs triggered by the regular BSR triggering module are canceled by the regular BSR canceling module, cancel all SRs triggered by the SR triggering module.

In an implementation of this embodiment, the SR is in one-to-one correspondence to the regular BSR triggering the SR; the SR canceling module is specifically configured to cancel the corresponding SR after each regular BSR is canceled.

The SR sending module 45 is configured to: if no uplink transmission resource is available in the current TTI, and an SR in a triggered state, which is triggered by the SR triggering module 42, exists, send the SR by using an SR resource or a random access procedure.

By using the method for sending an SR and the UE provided by the above embodiments, if data in a logical channel triggering a regular BSR meets a non-transmittable condition, the BSR and SR are canceled. Therefore, firstly, unnecessary sending of the SR is reduced, which reduces power consumption of the UE, and reduces interference caused to other users; secondly, releasing of related resources and the random access procedure caused by the failure to send the SR (that is, the SR counter reaches the maximum number of SR transmissions) are avoided, thereby saving signaling overheads and random access resources. In addition, more beneficial effects are reflected in other subsequent implementations.

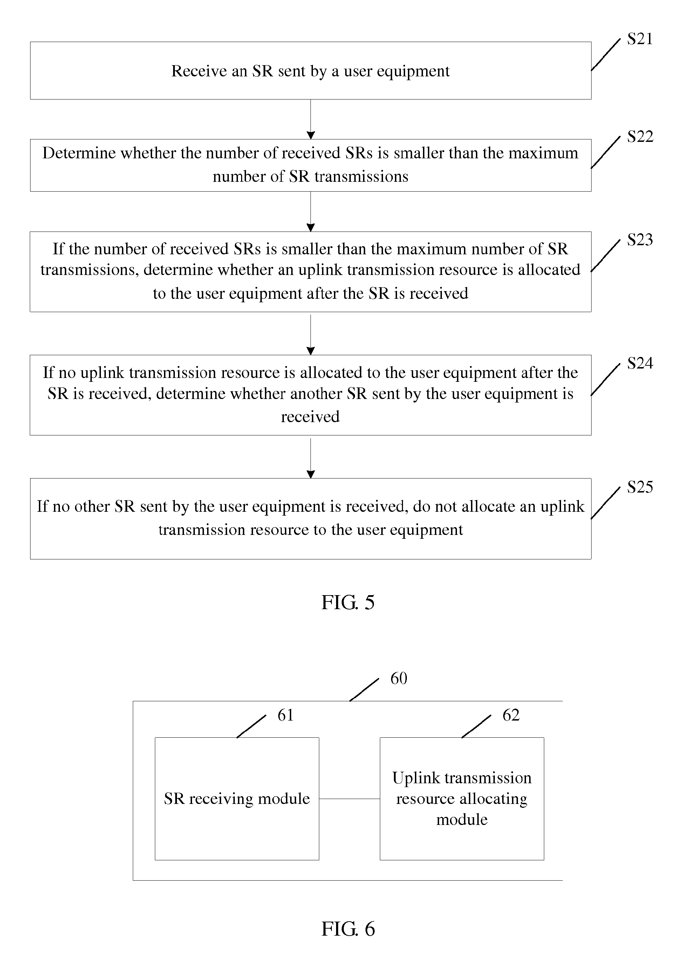

FIG. 5 is a flowchart of a transmission resource allocation method according to an embodiment of the present invention. The transmission resource allocation method includes the following steps:
Step 21: Receive an SR sent by a user equipment.
Step 22: Determine whether the number of received SRs is smaller than the maximum number of SR transmissions.
Step 23: If the number of received SRs is smaller than the maximum number of SR transmissions, determine whether an uplink transmission resource is allocated to the user equipment after the SR is received.
Step 24: If no uplink transmission resource is allocated to the user equipment after the SR is received, determine whether another SR sent by the user equipment is received.
Step 25: If no other SR sent by the user equipment is received, do not allocate an uplink transmission resource to the user equipment.

Specifically, if the base station receives the SR sent by the UE and the number of received SRs is smaller than the maximum number of SR transmissions, the base station should respond to the SR and allocate an uplink transmission resource to the UE. However, if no uplink transmission resource is allocated to the UE due to reasons such as restrictions of a resource allocation rule, and no SR sent by the UE is subsequently received, it indicates that the SR of the UE is canceled, that is, it indicates that the UE does not have transmittable data because data is discarded or due to other reasons, and in this case, no uplink transmission resource is allocated to the UE.

FIG. 6 is a schematic structural diagram of a base station according to an embodiment of the present invention. A base station 60 in this embodiment may implement the transmission resource allocation method provided by the embodiment of the present invention as shown in FIG. 5. As shown in FIG. 6, the base station 60 may include an SR receiving module 61 and an uplink transmission resource allocating module 62.

The SR receiving module 61 is configured to receive an SR sent by a user equipment.

The uplink transmission resource allocating module 62 is configured to: determine whether the number of SRs received by the SR receiving module 61 is smaller than the maximum number of SR transmissions; if the number of received SRs is smaller than the maximum number of SR transmissions, determine whether an uplink transmission resource is allocated to the user equipment after the SR is received; if no uplink transmission resource is allocated to the user equipment after the SR is received, determine whether another SR sent by the user equipment is received; and if no other SR sent by the user equipment is received, not allocate an uplink transmission resource to the user equipment.

The transmission resource allocation method and base station provided by the above embodiments may determine, according to the cancellation of SR sending by the UE, that the UE does not have transmittable data due to reasons such as data discarding, and do not allocate an uplink transmission resource to the UE, thereby saving PDCCH and PUSCH resources.

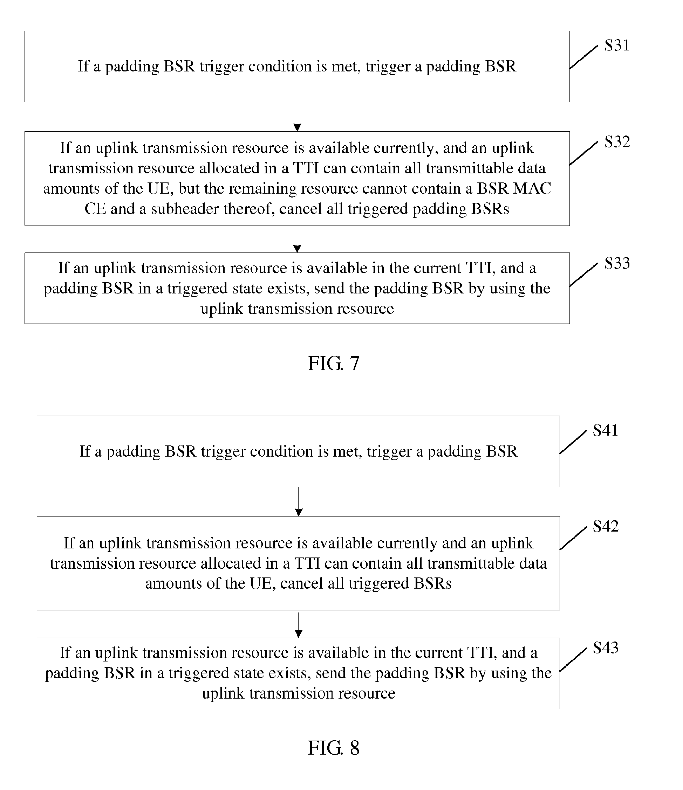

FIG. 7 is a flowchart of a method for sending a padding (Padding) BSR according to another embodiment of the present invention. The method for sending a padding BSR according to this embodiment includes the following steps:
Step S31: If a padding BSR trigger condition is met, trigger a padding BSR.

In an implementation of this embodiment, the "padding BSR trigger condition" is triggering a padding BSR when a remaining uplink transmission resource can contain a BSR MAC CE and a subheader thereof.

Step S32: If an uplink transmission resource is available in a current TTI, and an uplink transmission resource allocated in a TTI can contain all transmittable data amounts of the UE, but the remaining resource cannot contain a BSR MAC CE and a subheader thereof, cancel the triggered padding BSR.

Step S33: If an uplink transmission resource is available in the current TTI, and a padding BSR in a triggered state exists, send the padding BSR by using the uplink transmission resource.

Step S32 means that if the uplink transmission resource allocated in a TTI can contain all transmittable data amounts of the UE, but the remaining resource can contain a BSR MAC CE and a subheader thereof, none of the triggered BSRs will be canceled. However, all transmittable data of the UE has been transmitted by using the uplink transmission resource, and actually it is unnecessary to send a BSR.

In view of this, another embodiment of the present invention provides a method for sending a padding BSR. FIG. 8 is a flowchart of an improved method for sending a padding BSR according to another embodiment of the present invention. The method includes the following steps:
Step S41: If a padding BSR trigger condition is met, trigger a padding BSR.

In an implementation of this embodiment, the "padding BSR trigger condition" is triggering a padding BSR when a remaining uplink transmission resource can contain a BSR MAC CE and a subheader thereof.

Step S42: If an uplink transmission resource is available currently and an uplink transmission resource allocated in a TTI can contain all transmittable data amounts of the UE, cancel all triggered BSRs.

Step S43: If an uplink transmission resource is available in the current TTI, and a padding BSR in a triggered state exists, send the padding BSR by using the uplink transmission resource.

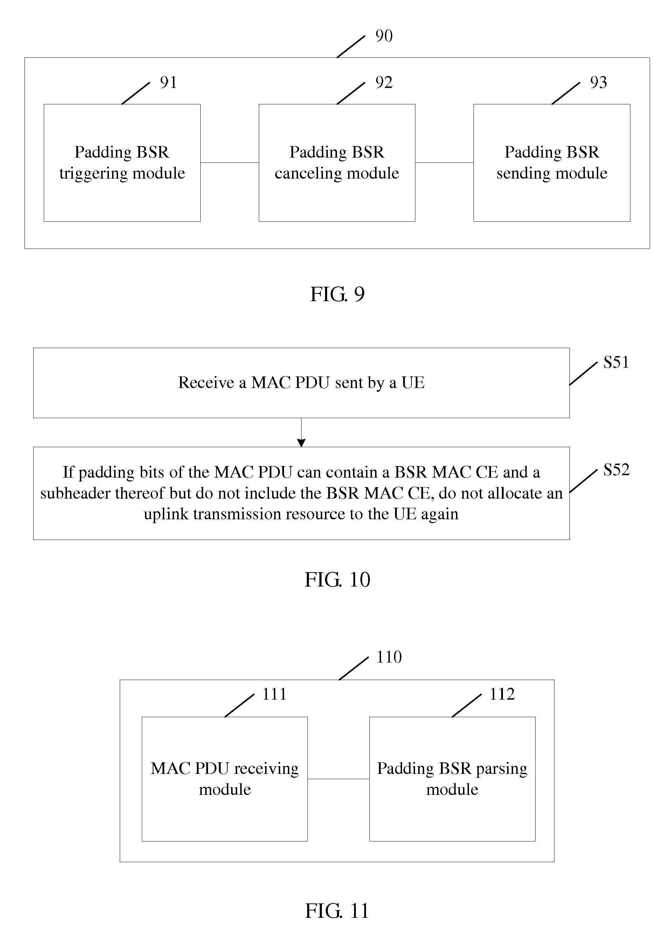

FIG. 9 is a schematic structural diagram of a UE according to an embodiment of the present invention. A UE 90 in this embodiment may implement the method for sending a padding BSR according to the embodiment of the present invention as shown in FIG. 8. As shown in FIG. 9, the UE 90 may include a padding BSR triggering module 91, a padding BSR canceling module 92, and a padding BSR sending module 93.

The padding BSR triggering module 91 is configured to trigger a padding BSR if a padding BSR triggering condition is met.

The padding BSR canceling module 92 is configured to: if an uplink transmission resource is available currently and an uplink transmission resource allocated in a TTI can contain all transmittable data amounts of the UE, cancel the padding BSR triggered by the padding BSR triggering module.

The padding BSR sending module 93 is configured to: if an uplink transmission resource is available in the current TTI, and a padding BSR in a triggered state, which is triggered by the padding BSR triggering module, exists, send the padding BSR by using the uplink transmission resource.

Because the method for sending a padding BSR and the UE provided by the above embodiments cancel the triggered BSR if an uplink transmission resource is available currently and an uplink transmission resource allocated in a TTI can contain all transmittable data amounts of the UE, unnecessary data sending is reduced.

FIG. 10 is a flowchart of a transmission resource allocation method according to an embodiment of the present invention. The transmission resource allocation method includes the following steps:
Step 51: Receive a MAC PDU sent by a UE.
Step 52: If padding bits of the MAC PDU can contain a BSR MAC CE and a subheader thereof but do not include the BSR MAC CE, do not allocate an uplink transmission resource to the UE again.

FIG. 11 is a schematic structural diagram of a base station according to another embodiment of the present invention. A base station 110 in this embodiment may implement the transmission resource allocation method according to the embodiment of the present invention as shown in FIG. 10. As shown in FIG. 11, the base station 110 may include a MAC PDU receiving module 111 and a padding BSR parsing module 112.

The MAC PDU receiving module 111 is configured to receive a MAC PDU sent by a UE.

The padding BSR parsing module 112 is configured to: if padding bits of the MAC PDU can contain a BSR MAC CE and a subheader thereof but do not include the BSR MAC CE, not allocate an uplink transmission resource to the UE again.

Because the transmission resource allocation method and base station provided by the above embodiments determine, according to the case that the padding bits of the MAC PDU can contain a BSR MAC CE and a subheader thereof but do not include the BSR MAC CE, that data of the UE has been sent completely, and do not allocate an uplink transmission resource to the UE again, allocation of extra uplink transmission resources is reduced.

Finally, it should be noted that persons of ordinary skill in the art should understand that all or a part of the steps of the method provided in the embodiments above may be implemented by a program instructing relevant hardware. The program may be stored in a computer-readable storage medium. When the program runs, the program executes the steps of the method specified in any embodiment above. The storage medium may be a magnetic disk, a CD-ROM, a read-only memory (ROM) or a random access memory (RAM).

All functional units in the embodiments of the present invention may be integrated into a processing module, or each functional unit exists alone physically, or two or more of the units are integrated into one module. The integrated module may be implemented in the form of hardware, or may be implemented in the form of a software functional module. When the integrated module is implemented in the form of a software functional module and sold or used as an independent product, the integrated module may be stored in a computer-readable storage medium. The storage medium may be a read-only memory, a magnetic disk, or a CD-ROM. The above apparatuses and systems may perform the methods described in the method embodiments.

The foregoing descriptions are merely exemplary embodiments of the present invention, but are not intended to limit the present invention. Any modification, equivalent replacement, or improvement derived within the spirit and principle of the present invention shall fall within the protection scope of the present invention.

## Claims

1. A method for sending a buffer status report BSR, wherein the method comprises:
if a logical channel group LCG logical channel meets a regular BSR trigger condition, triggering a first regular BSR; or if a BSR retransmission timer expires and any LCG logical channel has transmittable data, triggering a second regular BSR;
if the LCG logical channel triggering the first regular BSR meets a non-transmittable condition, canceling the first regular BSR; or if all LCG logical channels meet a non-transmittable condition after the second regular BSR is triggered, canceling the second regular BSR; and
if an uplink transmission resource is available in a current transmission time interval TTI, and the first or second regular BSR in a triggered state exists, sending a buffer status report media access control control element BSR MAC CE by using the uplink transmission resource.

2. The method according to claim 1, wherein the meeting the regular BSR trigger condition by the LCG logical channel is meeting any one of the following conditions:
in the LCG logical channel, an amount of transmittable data increases from zero or data therein becomes transmittable, and a priority of the LCG logical channel is higher than priorities of all other LCG logical channels having transmittable data; and
in the LCG logical channel, an amount of transmittable data increases from zero, and previously no LCG logical channel has transmittable data.

3. The method according to claim 1, wherein the meeting the non-transmittable condition by the LCG logical channel is: the LCG logical channel has no transmittable data.

4. A user equipment, wherein the user equipment comprises:
a regular BSR triggering module, configured to: if an LCG logical channel meets a regular BSR trigger condition, trigger a first regular BSR, or if a BSR retransmission timer expires and any LCG logical channel has transmittable data, trigger a second regular BSR;
a regular BSR canceling module, configured to: if the LCG logical channel triggering the first regular BSR meets a non-transmittable condition, cancel the first regular BSR triggered by the regular BSR triggering module, or if all LCG logical channels meet a non-transmittable condition after the second regular BSR is triggered, cancel the second regular BSR triggered by the regular BSR triggering module; and
a regular BSR sending module, configured to: if an uplink transmission resource is available in a current TTI, and the first or second regular BSR in a triggered state, which is triggered by the regular BSR triggering module, exists, send a BSR MAC CE by using the uplink transmission resource.

5. The user equipment according to claim 4, wherein:
the regular BSR triggering module being configured to trigger the first regular BSR if the LCG logical channel meets the regular BSR trigger condition, specifically comprises:
the regular BSR triggering module being configured to trigger the first regular BSR if the LCG logical channel meets any one of the following conditions:
in the LCG logical channel, an amount of transmittable data increases from zero or data therein becomes transmittable, and a priority of the LCG logical channel is higher than priorities of all other LCG logical channels having transmittable data; and
in the LCG logical channel, an amount of transmittable data increases from zero, and previously no LCG logical channel has transmittable data.

6. The user equipment according to claim 4, wherein the regular BSR canceling module is specifically configured to:
if the LCG logical channel triggering the first regular BSR has no transmittable data, cancel the first regular BSR triggered by the regular BSR triggering module, or if no LCG logical channel has transmittable data after the second regular BSR is triggered, cancel the second regular BSR triggered by the regular BSR triggering module.

7. A method for sending a scheduling request SR, wherein the method comprises:
if an LCG logical channel meets a regular BSR trigger condition, triggering a first regular BSR; or if a BSR retransmission timer expires and any LCG logical channel has transmittable data, triggering a second regular BSR;
if no uplink transmission resource is available in a current TTI, and the first or second regular BSR in a triggered state exists, triggering an SR;
if the LCG logical channel triggering the first regular BSR meets a non-transmittable condition, canceling the first regular BSR; or if all LCG logical channels meet a non-transmittable condition after the second regular BSR is triggered, canceling the second regular BSR;
if all regular BSRs are canceled, canceling all SRs; and
if no uplink transmission resource is available in the current TTI, and an SR in a triggered state exists, sending the SR by using an SR resource or a random access procedure.

8. The method according to claim 7, wherein the meeting the regular BSR trigger condition by the LCG logical channel is meeting any one of the following conditions:
in the LCG logical channel, an amount of transmittable data increases from zero or data therein becomes transmittable, and a priority of the LCG logical channel is higher than priorities of all other LCG logical channels having transmittable data; and
in the LCG logical channel, an amount of transmittable data increases from zero, and previously no LCG logical channel has transmittable data.

9. The method according to claim 7, wherein the meeting the non-transmittable condition by the LCG logical channel is: the LCG logical channel has no transmittable data.

10. The method according to claim 7, wherein: the SR is in one-to-one correspondence to the first or second regular BSR that triggers the SR; and
the canceling all SRs if all regular BSRs are canceled specifically comprises: canceling a corresponding SR after each regular BSR is canceled.

11. A user equipment, wherein the user equipment comprises:
a regular BSR triggering module, configured to: if a logical channel group LCG logical channel meets a regular BSR trigger condition, trigger a first regular BSR, or if a BSR retransmission timer expires, and any LCG logical channel has transmittable data, trigger a second regular BSR;
an SR triggering module, configured to: if no uplink transmission resource is available in a current TTI, and the first or second regular BSR in a triggered state, which is triggered by the regular BSR triggering module, exists, trigger an SR;
a regular BSR canceling module, configured to: if the LCG logical channel triggering the first regular BSR meets a non-transmittable condition, cancel the first regular BSR triggered by the regular BSR triggering module, or if all LCG logical channels meet a non-transmittable condition after the second regular BSR is triggered, cancel the second regular BSR triggered by the regular BSR triggering module;
an SR canceling module, configured to: if all regular BSRs triggered by the regular BSR triggering module are canceled by the regular BSR canceling module, cancel all SRs triggered by the SR triggering module; and
an SR sending module, configured to: if no uplink transmission resource is available in the current TTI, and an SR in a triggered state, which is triggered by the SR triggering module, exists, send the SR by using an SR resource or a random access procedure.

12. The user equipment according to claim 11, wherein the regular BSR triggering module being configured to trigger the first regular BSR if the LCG logical channel meets the regular BSR trigger condition, specifically comprises:
the regular BSR triggering module being configured to trigger the first regular BSR if the logical channel group LCG logical channel meets any one of the following conditions:
in the LCG logical channel, an amount of transmittable data increases from zero or data therein becomes transmittable, and a priority of the LCG logical channel is higher than priorities of all other LCG logical channels having transmittable data; and
in the LCG logical channel, an amount of transmittable data increases from zero, and previously no LCG logical channel has transmittable data.

13. The user equipment according to claim 11, wherein the regular BSR canceling module is specifically configured to:
if the LCG logical channel triggering the first regular BSR has no transmittable data, cancel the first regular BSR triggered by the regular BSR triggering module, or if no LCG logical channel has transmittable data after the second regular BSR is triggered, cancel the second regular BSR triggered by the regular BSR triggering module.

14. The user equipment according to claim 11, wherein:
the SR triggering module is specifically configured to: if no uplink transmission resource is available in the current TTI, and the first or second regular BSR in a triggered state, which is triggered by the regular BSR triggering module, exists, trigger an SR, wherein the SR is in a one-to-one correspondence to the regular BSR that triggers the SR;
the SR canceling module is specifically configured to cancel a corresponding SR after each regular BSR is canceled.

15. A transmission resource allocation method, wherein the method comprises:
receiving an SR sent by a user equipment;
determining whether the number of received SRs is smaller than a maximum number of SR transmissions;
if the number of received SRs is smaller than the maximum number of SR transmissions, determining whether an uplink transmission resource is allocated to the user equipment after the SR is received;
if no uplink transmission resource is allocated to the user equipment after the SR is received, determining whether another SR sent by the user equipment is received; and
if no other SR sent by the user equipment is received, skipping allocating an uplink transmission resource to the user equipment.

16. A base station, wherein the base station comprises:
an SR receiving module, configured to receive an SR sent by a user equipment; and
an uplink transmission resource allocating module, configured to: determine whether the number of SRs received by the SR receiving module is smaller than the maximum number of SR transmissions; if the number of received SRs is smaller than the maximum number of SR transmissions, determine whether an uplink transmission resource is allocated to the user equipment after the SR is received; if no uplink transmission resource is allocated to the user equipment after the SR is received, determine whether another SR sent by the user equipment is received; and if no other SR sent by the user equipment is received, skip allocating an uplink transmission resource to the user equipment.
